# EUROPEAN PATENT APPLICATION

(11) **EP 3 822 900 A1**
(43) Date of publication of application: **19.05.2021**
(21) Application number: 19208624.7
(22) Date of filing: 12.11.2019
(51) Int. Cl.: G06Q 30/02

(54) **A METHOD AND SYSTEM FOR DELIVERING CONTENT TO A USER**

(71) Applicant: Koninklijke Philips N.V., 5656 AG Eindhoven (NL)
(72) Inventor: WANG, Lu, 5656 AE Eindhoven (NL); HARMA, Aki, 5656 AE Eindhoven (NL)
(74) Representative: Philips Intellectual Property & Standards

(57) **Abstract**

A computer-implemented method and system is provided for delivering content to a user. Items are generated for output to the user based on a user profile. The items have textual information content for providing information and/or advice and also a textual or visual item title or summary which is presented in an initial view of the item to be output to the user. The item title or summary is modified by adding elements based on the user profile information while retaining the information and/or advice. In this way, the probability of a user perceiving an interest in the item is increased, for the same information content. This improves the usage of the system.

## Description

### FIELD OF THE INVENTION

The invention relates to a method and system for delivering content to a user, in particular advisory information, for example advisory information during pregnancy.

### BACKGROUND OF THE INVENTION

The invention relates generally to personalization of content to be delivered to a user. One example of interest is advisory information during pregnancy.

There are known apps for use during pregnancy. One such app is named the "Pregnancy+" app. This generates interactive images for every week throughout a pregnancy. The app for example provides daily pregnancy information and allows display of various information such as any saved scan images, a personal diary, a pregnancy weight log, a doctor visit log, a kick counter, a contraction timer, etc.

One aspect of particular medical interest is that the app provides dietary, exercise and labor information. This information is for example provided as articles to be read by the user.

The information is provided at a suitable time to be relevant to the gestational stage of the pregnancy.

It is desirable to achieve as much engagement with the app as possible so that the users are well-informed, and hence need less professional advice during the pregnancy and remain reassured when everything is progressing normally.

A recent survey conducted by Pregnancy+ indicates that about 40% of US participants read articles provided by the Pregnancy+ app daily, and another 40% read them 2-3 times per week.

It would be desirable to encourage the less regular active users to make use of the app more regularly to improve or sustain the engagement.

It is generally known to modify content to adapt it to a particular user's needs or interests.

However, there remain problems to be addressed. For example, users may receive similar content that was provided to them before. This will be perceived as boring and therefore have a negative effect on engaging with the app. A user may also not realize that a particular content item is of interest to them from an initial glance at the information which is presented to them.

### SUMMARY OF THE INVENTION

The invention is defined by the claims.

According to examples in accordance with an aspect of the invention, there is provided a computer-implemented method for delivering content to a user, comprising:
obtaining user profile information relating to preferences of a user;
selecting an item for output to the user based on the user profile information, wherein the item comprises at least:
   textual information content for providing information and/or advice; and
   a textual or visual item title or summary which is presented in an initial view of the item to be output to the user; and
adapting the item title or summary by adding elements which relate to the user profile information while retaining the information and/or advice.

This method provides information content to a user which is relevant to their preferences, with modification of a summery or title to make the perceived interest to the user more pronounced, and thereby encourage the user to consult the content. The items for example comprises articles to be read by the user to provide useful advice, tips or other information. The user profile information is for example obtained from a memory.

By adapting an item title or summary, the content of the item is adapted, without changing the information that is considered relevant to the user. The change to the item title or summary is intended to make it more immediately apparent to the user that the item is indeed of interest. The adaptation involves adding elements to a title or summary . Other changes may also be made, such as changing the order of items mentioned in a title. Thus, the initial information presented to the user is adapted to match their interests, concerns, or a perceived need for additional education about a particular topic relevant to them.

By way of example, items in the form of articles often address more than one topic and some people may be more interested about one aspect than about the other. For example, an article relevant to pregnancy may relate to nutrition and the development of the fetus. One user may be concerned about pregnancy nutrition, and another user is interested in the fetal development. If the title and/or a banner image of the article shows mostly food-related items the second reader may not appreciate that the article addresses aspects of fetal development that might be interesting for the user.

The items may comprise visual image content which is presented in an initial view of the item to be output to the user, and wherein the method comprises adapting the visual image content based on the user profile information.

In this way, an image which is intended to convey the nature of the contents of the item may be adapted to better target the particular user.

The method may comprise modifying an ordering of the textual information content based on the user profile information while retaining the information and/or advice.

This may for example involve giving more prominence to aspects of an item considered of particular relevance to the user, e.g. by placing the more relevant content at the beginning of the item.

The method may comprise modifying the user profile according to items which have previously been output. In this way, a frustration of the user in being presented with content with which they are already familiar is reduced.

The user profile for example comprises a set of keywords relating to topics of interest to the user. These can be derived from the user input. The keywords for example have a weighting to enable a comparison with the content of the items. The method may thus comprise setting the weightings based on the user profile information.

The user profile information is for example compiled based on manual textual user input. Topics of interest to the user and keywords may then be extracted from the manual textual user input. The keywords may then be weighted according to the extracted topics of interest.

An item to output is for example selected based on a similarity analysis between the item and the user profile information. This similarity analysis for example comprises a textual analysis of the item based on keywords of the user profile information.

The method may be for providing content to a user during pregnancy, wherein the content comprises advisory information, wherein the user profile information additionally relates to the gestational stage of the pregnancy, and wherein the textual information content is for providing information and/or advice relevant to the pregnancy.

The method thus provides information content to a user which is relevant to their pregnancy. For example, the items may be selected based on both the gestational stage of the user and topics of interest to the user, derived from the user profile information. The items for example comprises articles to be read by the user to provide useful advice, tips or other information to improve their pregnancy experience.

The invention also provides a computer program comprising computer program code means which is adapted, when said program is run on a computer, to implement the method defined above.

The invention also provides a system for delivering content to user, comprising:
a first data structure storing user profile information relating to preferences of a user;
a memory storing a set of items for output to the user, wherein the items comprise at least:
   textual information content for providing information and/or advice; and
   a textual or visual item title or summary which is presented in an initial view of the item for output to the user;
a processor which is adapted to:
   select an item for output to the user based on the user profile information; and
   adapt the item title or summary by adding elements based on the user profile information while retaining the information and/or advice.

The processor is for example adapted to implement the method as defined above.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 shows a computer-implemented method for delivering advisory information during pregnancy;
Figure 2 shows the method of Figure 1 in more detail; and
Figure 3 shows a system for delivering advisory information during pregnancy.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a computer-implemented method and system for delivering content. Items are generated for output to the user based on a user profile. The items have textual information content for providing information and/or advice and also a textual or visual item title or summary which is presented in an initial view of the item to be output to the user. The item title or summary is modified based on the user profile information by adding elements, while retaining the information and/or advice. In this way, the probability of a user perceiving an interest in the item is increased, for the same substantive information content. This improves the usage of the system.

The invention is of interest generally for modifying content to be provided to a user. The invention will be explained with reference to one particular use case, as part of a system for providing information during pregnancy.

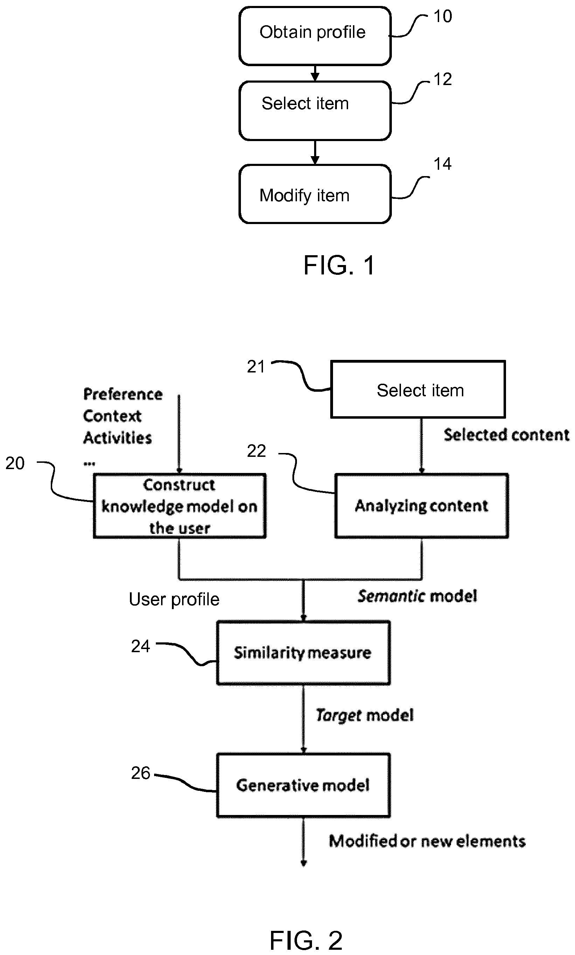

Figure 1 shows a computer-implemented method for delivering advisory information during pregnancy.

In step 10, user profile information is stored relating to preferences of a user as well as the gestational stage of the pregnancy. The profile information may be input manually by the user, although some of the information could be input automatically, for example by transfer from another application with which the user has already registered.

The user profile information may for example be based on historical usage and possibly other sources such as wearable sensor data, questionnaires, or behavior in social media. The user profile comprises a preference model representing the preferences and the context of the user. In one embodiment the user profile is represented as a list of keywords or tags.

The users' subjective preferences can be collected by questionnaires or user profiles in an app. The gestational age can be used as a reference to provide a default set of preferences.

With smartwatches and smart phones, physical activities and sleep quality can be monitored. Additionally, users may track their nutrition intake with a mobile app or blood pressure with home devices. Based on the sensing data and context, information can be derived about the routines and activities of the user, which can be used as a part of the user profile. Additionally, browsing and search history, measurements from a GP and consultation highlights can be utilized in the user profile.

The user profile may be based on many different kinds of knowledge models ranging from simple topic or keyword lists to semantic knowledge graphs or ontologies.

The user profile thus typically includes medical information relating to the user, and also personal information relating to topics of interest to the user. Keywords may for example be used with a weighting.

In step 12, an item is selected for output to the user based on the user profile information. The item is for example an informative article giving the user advice relevant to their particular stage of pregnancy and/or other medical conditions, and/or personal interests. The item is selected from a database having a set of the items.

Generally, the items comprise textual information content for providing information and/or advice relevant to the pregnancy. The text may of course be supplemented with other media content. Thus, the items are content to be read by the user for receiving education or advice which is relevant generally to pregnancy, and particularly their stage of pregnancy.

The items also have a textual or visual item title or summary which is presented in an initial view of the item to be output to the user. This is an article title or banner which characterizes the remaining content.

In step 14, the item title or summary is adapted based on the user profile information while retaining the information and/or advice.

This method provides information content to a user which is relevant to their pregnancy. By adapting an item title or summary, the content of the item is adapted, without changing the information that is considered relevant to the user. The change to the item title or summary makes it more immediately apparent to the user that the item is indeed of interest.

The adaptation is for example to select a title or summary from a set of options for that particular item, or change the title in a real-time manner to best match the user profile. The initial information presented to the user is in this way adapted to match their interests, concerns, or a perceived need for additional education about a particular topic relevant to their pregnancy.

Figure 2 shows the method in more detail.

In step 20, the user profile is created, as explained above.

In step 21, an item is selected based on the user profile. This involves operation of a personalized recommendation system, which may be conventional, as used in existing solutions.

The selected content item is analyzed in step 22 using text and image understanding methods in relation to a semantic content model that is relevant for the target application. In one embodiment, this results in a list of keywords or tags, which comprise a semantic model.

In step 24, the semantic model is compared to the user profile using a similarity measure. This produces a target model which is a semantic intersection of the semantic model and the user profile.

In step 26, a generative model is used to modify, select, or generate new elements for the content item that matches better the user profile of the user. The generative model for example produces at least a new title and/or visual banner to the article. In additional embodiments the main text may also be modified in various ways.

An example of the application of the method will now be described.

When a user provides information for the user profile, manual text based input can be directly added to a list of keywords if they are words or short phrases. In the case of long phrases or sentences, automated keyword extraction, for example using NLP, may convert the text input into words.

As an example, a user Lucy enters an interest in fertility. Her sleep tracker shows that her sleep quality has declined in the last month. Her search history (for the system) also indicates that she is interested in, and has read, about nutrition.

From this information, a topic list may be creates as shown in Table 1.

**Table 1**

| **Topic** |
|---|
| Fertility |
| Nutrition |
| sleep |

The model may remove certain topics (e.g., 'miscarriage') based on a predefined set, for example with time constraints. This is to make sure the right topics are introduced at the right time.

The content analysis in step 22 uses automatic and manual text and image analysis methods as are well known.

A simple way to extract a list of keywords in a selected article is to obtain a tag list extracted from the article based on a predefined bag-of-words model. Table 2 shows a tag list extracted from an article.

**Table 2**

| **Keywords** |
|---|
| Health |
| Hormones |
| Meal |
| Sleep |
| Fertility |
| Nutrition |
| Rashes |
| Alcohol |
| Nausea |

A second option is to use topic modeling, which automatically extracts keywords in an article.

The step 24 of obtaining a similarity measure may use various known methods for similarity measurement between content representations. Typical methods are based on counting occurrences of words. It is also common to use word2vec or doc2vec representations for text content where text fragments or entire articles are represented by coordinates in a metric vector space. There the similarity can be measured as distance or a correlation (cosine similarity) measure.

In one example, the calculation of weighting values is used.

The initially assigned weights may all be zero (as shown in Table 3, for the keywords of Table 2) or there may be default weights to different keywords.

**Table 3**

| **Keywords** | **Weight** |
|---|---|
| Health | 0 |
| Hormones | 0 |
| Meal | 0 |
| Sleep | 0 |
| Fertility | 0 |
| Nutrition | 0 |
| Rashes | 0 |
| Alcohol | 0 |
| Nausea | 0 |

The initial weights do not need to be equal to each other. They may differ based on many factors, for example, a user's top concern or severity of certain symptoms.

The extracted topic list (shown in Table 1) is then used to update the weights of corresponding keywords. This for example gives Table 4.

**Table 4**

| **Keywords** | **Weight** |
|---|---|
| Health | 0 |
| Hormones | 0 |
| Meal | 0 |
| Sleep | 1 |
| Fertility | 1 |
| Nutrition | 1 |
| Rashes | 0 |
| Alcohol | 0 |
| Nausea | 0 |

A final weight adjustment may then be carried out. Several methods may be used in order to simultaneously update the synonyms, similar words and cause-effect words. For example, the method may involve detection and extraction of cause-effect words, measurement of semantic similarity and prediction of other keywords.

For the example of Lucy, because nutrition information was viewed before, the weight has been reduced to 0.5. Meal is chosen as synonym to nutrition, and Alcohol is seen as a cause-effect word to nutrition, therefore they are both assigned 0.25. Of course, many different approaches may be used for creating an updated list.

Table 5 shows an example of the outcome of this final adjustment.

**Table 5**

| **Keywords** | **Weight** |
|---|---|
| Health | 0 |
| Hormones | 0 |
| Meal | 0.25 |
| Sleep | 1 |
| Fertility | 1 |
| Nutrition | 0.5 |
| Rashes | 0 |
| Alcohol | 0.25 |
| Nausea | 0 |

The generative model updates a portion of the selected content, in particular the title or banner, and optionally also the content. The title or banner is modified by adding elements (textual or graphical) which relate to the preferences of the user, so that the user perceives the remaining content as being or particular relevance to them.

In this example, the top keywords are now Sleep and Fertility. Consequently, the generative model may select or generate a title "Sleep and Fertility" to best capture the interest of the user. The article will relate to sleep and fertility but it may relate also to other issues, which are more relevant to other users. Thus, different users will receive different content, depending on their medical situation (e.g. gestational stage) and their personal preferences. However, the actual substantive content of the article remains the same. Thus, there is personalization of content but without a massive expansion of the total required amount of content.

The articles may by default have a blank title, so that a title is always generated by selecting elements which match both the main information or advice content of the article as well as the user preferences. Thus, the title may be created based on identifying an overlap between the main content and the user preferences. Alternatively, the articles may be created with a generic title to which additional elements are provided to further emphasize the potential relevance to the user. Title elements may be removed before elements are added. Thus, the modification to the title or banner involves adding elements to make sure there is a match with the preferences of the user.

Optionally, the users' knowledge status could influence the title format. For instance, if the user has a knowledge gap in Fertility and Sleep. The title could be formatted in a question, such as "Do you know a lack of sleep can also affect your fertility?".

In a more advanced setting, a further measure of the order of content elements may be provided. The way of adjusting the order of the content of an item is similar to the use of weights given in the example above. For example, if nutrition is more important than sleep to a particular user, then the sections describing nutrition can be moved earlier than sleep.

For this purpose, the items may have multiple sections, within the textual information content, which can be ordered in a plurality of ways. The order selection then depends on the user profile in the same way as described above for the title or summary content.

Instead of measuring how much each keyword matters to the user, a completely different quantification method may be used. One example is a measure of serendipity (i.e., how new and relevant content is to the user). One way of measuring serendipity is to calculate how similar recommended items are to a user's history.

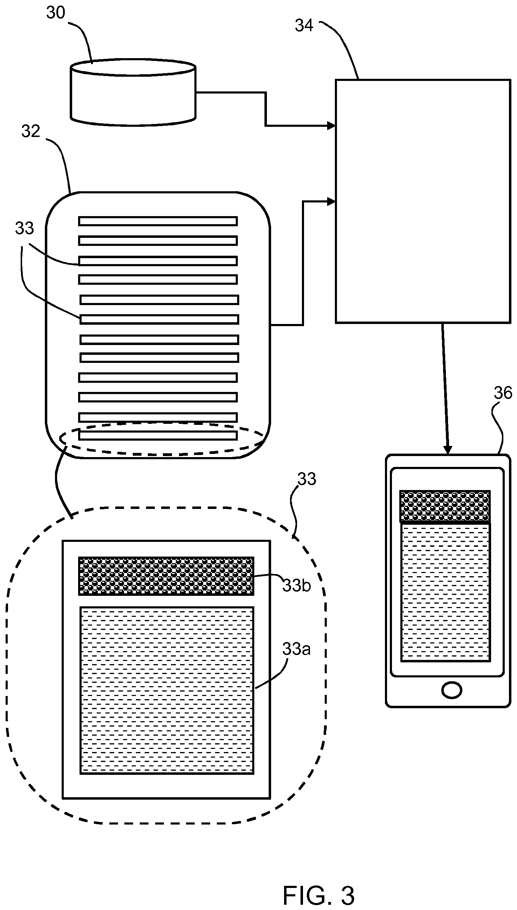

Figure 3 shows a system for delivering content, in this example advisory information during pregnancy. The system comprises a first data structure 30 storing the user profile information described above, relating to preferences of a user and in this particular example the gestational stage of the pregnancy.

A memory 32 stores a set of items 33 for output to the user during the pregnancy. The items comprise at least textual information content 33a for providing information and/or advice (in this example which is relevant to the pregnancy) and a textual or visual item title or summary 33b which is presented in an initial view of the item for output to the user.

A processor 34 selects an item for output to the user based on the user profile information and adapts the item title or summary based on the user profile information while retaining the information and/or advice.

The output is provided to the user on their smartphone 36 or other wireless device. Indeed, the processor 34 is typically the mobile phone processor, and the data structure 30 and memory 32 are also the memory elements of the mobile phone, even though they are shown as separate in Figure 3. The system and method is preferably implemented as an app loaded on the mobile phone, and the mobile phone provides the interface to the user. The method is thus implement by a computer program running on the processor of the mobile phone.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

A single processor or other unit may fulfill the functions of several items recited in the claims.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to".

Any reference signs in the claims should not be construed as limiting the scope.

## Claims

1. A computer-implemented method for delivering content to a user, comprising:
(10) obtaining user profile information relating to preferences of a user;
(12) selecting an item for output to the user based on the user profile information, wherein the item comprises at least:
textual information content for providing information and/or advice; and
a textual or visual item title or summary which is presented in an initial view of the item to be output to the user; and
(14) adapting the item title or summary by adding elements which relate to the user profile information while retaining the information and/or advice.

2. A method as claimed in claim 1, wherein the items comprise visual image content which is presented in an initial view of the item to be output to the user, and wherein the method comprises adapting the visual image content based on the user profile information.

3. A method as claimed in claim 1 or 2, comprising modifying an ordering of the textual information content based on the user profile information while retaining the information and/or advice.

4. A method as claimed in any one of claims 1 to 3, comprising modifying the user profile according to items which have previously been output.

5. A method as claimed in any one of claims 1 to 4, wherein the user profile comprises a set of keywords relating to topics of interest to the user, wherein optionally the keywords have a weighting.

6. A method as claimed in claim 5, comprising setting weightings based on the user profile information.

7. A method as claimed in any one of claims 1 to 6, comprising compiling the user profile information based on manual textual user input.

8. A method as claimed in claim 7, comprising extracting topics of interest to the user from the manual textual user input.

9. A method as claimed in claim 8, comprising weighting keywords according to the extracted topics of interest.

10. A method as claimed in any one of claims 1 to 9, comprising selecting an item to output based on a similarity analysis (24) between the item and the user profile information.

11. A method as claimed in any one of claims 1 to 10, for providing content to a user during pregnancy, wherein the content comprises advisory information, wherein the user profile information additionally relates to the gestational stage of the pregnancy, and wherein the textual information content is for providing information and/or advice relevant to the pregnancy.

12. A method as claimed in claim 11, comprising selecting an item for output to the user based on both the gestational stage of the user and topics of interest to the user, derived from the user profile information.

13. A computer program comprising computer program code means which is adapted, when said program is run on a computer, to implement the method of any one of claims 1 to 12.

14. A system for delivering content to a user, comprising:
a first data structure (30) storing user profile information relating to preferences of a user;
a memory (32) storing a set of items (33) for output to the user, wherein the items comprise at least:
textual information content (33a) for providing information and/or advice; and
a textual or visual item title or summary (33b) which is presented in an initial view of the item for output to the user;
a processor (34) which is adapted to:
select an item for output to the user based on the user profile information; and
adapt the item title or summary by adding elements based on the user profile information while retaining the information and/or advice.

15. A system as claimed in claim 14, wherein the processor is adapted to implement the method of any one of claims 1 to 13.
